(19) Europäisches Patentamt
European Patent Office
Office européen des brevets

(11) Veröffentlichungsnummer: **0 226 001**
**A2**

(12) # EUROPÄISCHE PATENTANMELDUNG

(21) Anmeldenummer: 86114830.2

(22) Anmeldetag: 24.10.86

(51) Int.Cl.[4]: C 07 F 7/18

(30) Priorität: 10.12.85 DE 3543567

(43) Veröffentlichungstag der Anmeldung: 24.06.87 Patentblatt 87/26

(84) Benannte Vertragsstaaten: AT BE CH DE FR GB IT LI NL

(71) Anmelder: **Degussa Aktiengesellschaft**
**Weissfrauenstrasse 9**
**D-6000 Frankfurt am Main 1(DE)**

(72) Erfinder: **Deschler, Ulrich, Dr.**
**Birkenweg 1**
**D-6450 Hanau 9(DE)**

(72) Erfinder: **Wolff, Siegfried**
**Weiherstrasse 28**
**D-5303 Bornheim(DE)**

(72) Erfinder: **Kleinschmit, Peter, Dr.**
**Wildaustrasse 19**
**D-6450 Hanau 9(DE)**

(72) Erfinder: **Michel, Rudolf**
**Josefstrasse 36**
**D-6463 Freigericht(DE)**

(54) **Verfahren zur Herstellung von Sulfensäurechloriden und Sulfensäureestern.**

(57) Die Erfindung betrifft ein Verfahren zur Herstellung von Sulfensäurechloriden und Sulfensäureestern mit hydrolisierbaren Silylgruppen, bei dem man ein Silylgruppenhaltiges Oligosulfan chloriert, das entstandene Sulfensäurechlorid abtrennt und durch Umsetzung mit einem Alkalialkoholat zu dem entsprechenden Sulfensäureester umwandelt.

EP 0 226 001 A2

Degussa Aktiengesellschaft, Weißfrauenstraße 9, 6000 Frankfurt am Main

Verfahren zur Herstellung von Sulfensäurechloriden und Sulfensäureestern

Gegenstand der Erfindung ist ein Verfahren zur Herstellung von Sulfensäurechloriden und Sulfensäureestern mit hydrolysierbaren Silylgruppen.

Aus der DE-OS 19 06 521 ist ein Verfahren zur Herstellung von Sulfensäurechloriden (Sulfenylchloriden) bekannt, bei dem eine ungesättigte Organosilanverbindung mit Schwefeldichlorid umgesetzt wird.
Gleichzeitig muß dabei aber auch die Chloranlagerung an eines der C-Atome der ursprünglich ungesättigten Bindung in der vorgelegten Verbindung in Kauf genommen werden.

N.Auner und J.Grobe (Z.anorg.allg.Chem.500 (1983) 132-160, insbesondere S. 153) beschrieben eine ähnliche $SCl_2$-Anlagerung, die jedoch von 1,3-Silacyclobutanen ausgeht, wobei aber ein Sulfenylchlorid mit nur einer hydrolysierbaren Gruppe am Si-Atom erhalten werden kann.
Die US-PS 4 278 585 betrifft Sulfensäureester, die man über den Weg der Veresterung der bei der Umsetzung von Silylgruppen-haltigen Mercaptanen mit Sulfurylchlorid gebildeten Sulfensäurechloride in Gegenwart von Aminen gewinnt.

Dieses Verfahren leidet darunter, daß man nur ein durch zahlreiche Nebenprodukte verunreinigtes, schwer auftrennbares Produktgemisch erhalten kann, und daß die Verwendung von Aminen als HCl-Fänger zu schwer filtrierbaren Niederschlägen führt.

...

Sulfensäurechloride bzw. Sulfensäureester mit hydrolysierbaren Silylgruppen finden Verwendung bei der Herstellung von mit Feuchtigkeit härtbaren oder vulkanisierbaren Polymeren bzw. als Verstärkungsadditiv in Kieselsäure-haltigen, mit Schwefel vernetzten Kautschukmischungen.

Aufgabe der Erfindung ist die Herstellung der genannten Chloride und Ester unter Erzielung guter Ausbeuten und reiner Produkte.

Gegenstand der Erfindung ist ein Verfahren zur Herstellung von Sulfensäurechloriden und Sulfensäureestern mit hydrolysierbaren Silylgruppen, dadurch gekennzeichnet, daß man ein Silylgruppenhaltiges Oligosulfan der Formel (I)

$$\left[(R)_b(R'O)_cSi-(CH_2)_n\right]_2-S_x$$ , in der

bedeuten:

R: $C_1$-$C_2$-Alkyl, insbesondere Methyl

R': $C_1$-$C_5$-Alkyl, $C_5$-$C_6$-Cycloalkyl, insbesondere Methyl, Ethyl, Cyclohexyl
Aralkyl, insbesondere Benzyl,

x: 2 oder 3 oder 4, bevorzugt 2

n: 1 oder 3, bevorzugt 3

b: 0 oder 1, bevorzugt 0

c: 2 oder 3, mit b+c=3

in einem gegenüber Chlor inerten organischen Lösungsmittel löst und diese Lösung langsam und unter starker Kühlung mit der 2- bis 6-fachen molaren Menge an Chlor, bezogen auf das Oligosulfan, versetzt, bis zur vollständigen Umsetzung zu einem Sulfensäurechlorid der in Formel (II) wiedergegebenen Zusammensetzung

$$Cl_a(R)_b(R'O)_dSi-(CH_2)_n-S\ Cl,$$

in der a: 1 oder 2 und d: 1 oder 2 ist mit a+b+d=3, und die anderen Symbole die oben angegebene Bedeutung haben, rührt,
das Lösungsmittel und eventuell gebildete Schwefelchloride im Vakuum abzieht,
das anfallende Rohprodukt im Vakuum fraktioniert,
das so erhaltene gereinigte Sulfensäurechlorid(-gemisch) gemäß Formel (II) in einem organischen Lösungsmittel löst,
unter kräftigem Rühren und in einer bevorzugten Ausführungsform unter gleichzeitigem Einleiten von Stickstoff diese Lösung tropfenweise mit der zu a stöchiometrischen Menge eines Alkohols der Formel (III)

R'OH bei einer

Temperatur von 0 bis 60 °C versetzt,
nach der Veresterung der Si-Cl-Gruppen das Lösungsmittel abzieht, durch fraktionierte Destillation das Sulfensäurechlorid der Formel (IV)

$$(R)_b(R'O)_cSi-(CH_2)_n-S\ Cl$$

erhält, in der die Symbole die oben angegebene Bedeutung haben,
diese Verbindung in einem inerten Lösungsmittel löst,
die Lösung bei 0 bis 60 °C, bevorzugt bei Raumtemperatur, mit der äquimolaren Menge eines Alkalialkoholats der Formel (V)

R'OY,

in der Y Na, K oder Li bedeutet, bevorzugt gelöst

...

in dem entsprechenden Alkohol R'OH, versetzt, das ausgefallene Alkalichlorid nach der Reaktion abfiltriert, das Lösungsmittel und den restlichen Alkohol abzieht und den Sulfensäureester der Formel (VI)

$$R_b(R'O)_cSi-(CH_2)_n-SOR'$$

gewinnt.

Die in der ersten Verfahrensstufe eingesetzten Oligosulfane gemäß Formel (I) sind z.B. nach den in der DE-PS 21 41 160 oder der DE-OS 33 11 340 beschriebenen Verfahren leicht und in hohen Ausbeuten zugänglich. Bei ihrer Umsetzung mit elementarem Chlor in gegenüber Chlor inerten Lösungsmitteln tritt eine Spaltung der Polysulfankette ein unter Bildung zweier Sulfensäurechloridfunktionen. Da bei Verwendung von Tri- und Tetrasulfanen zusätzlich die Bildung von Schwefelchloriden beobachtet wird, ist die Verwendung von Disulfanen ($x = 2$ in Formel (I)) bevorzugt, wenngleich Schwefelchloride leicht destillativ abgetrennt werden können. Als gegenüber Chlor inerte Lösungsmittel können insbesondere bei Temperaturen von $\leq 0°C$ vor allem im Dunkeln auch aromatische Kohlenwasserstoffe wie z.B. Benzol, Toluol, Xylol oder aliphatische wie z.B. n-Pentan, n-Hexan und Cyclohexan oder teilchlorierte Kohlenwasserstoffe z.B. Methylenchlorid, Chloroform und Tetrachlorkohlenstoff eingesetzt werden, doch ist Tetrachlorkohlenstoff hier und noch mehr bei erhöhter Temperatur unter Lichteinwirkung bevorzugt. Allein bei Temperaturen von unter - 23°C ist Chloroform, bei solchen von unter -64°C Methylenchlorid bevorzugtes Lösungsmittel. Geeignet sind ebenso THF, Dioxan, Diethylether und Acetonitril.

...

Elementares Chlor kann bei Reaktionstemperaturen von >- 100°C bis - 35°C in flüssiger Form dem Reaktionsgemisch zugetropft werden oder gasförmig durch die bei Temperaturen von - 35°C bis + 77°C gehaltenen Reaktionslösung geleitet werden. Es ist auch erfindungsgemäß, vorher kondensiertes und bei Temperaturen von >- 100°C bis - 35°C flüssig gehaltenes Chlor in eine Reaktionsmischung zu tropfen, deren Temperatur bei - 35°C bis + 77°C, bevorzugt -10°C bis +10°C liegt. Aus Gründen der technischen Durchführbarkeit ist es bevorzugt, gasförmiges Chlor bei einer Temperatur von 0 bis 5°C durch die Reaktionslösung zu leiten, da die teilweise Chlorierung der Alkoxysilylgruppen auch bei tieferen Temperaturen nicht zurückgedrängt werden kann. Wegen dieser teilweisen Bildung von Chlorsilylgruppen ist ein Chlorüberschuß erforderlich, der im Bereich von 1 - 5 Mol, bevorzugt bei 3 Mol liegt. Höhere Chlorüberschüsse sind nutzlos, da sie unreagiert das Reaktionsmedium wieder verlassen. Bei weniger als 3-fachem Chlorüberschuß bezogen auf das Oligosulfan (d.h. 4 Mol $Cl_2$ pro Mol Oligosulfan) verbleibt ein bestimmter Anteil an Schwefelketten unreagiert zurück, wodurch die Ausbeute an Sulfenylchloriden der Formel (II) entsprechend erniedrigt wird. Wegen der starken Exothermie führt man die Chlorierungsreaktion vorteilhafterweise im verdünnten Reaktionsmedium unter externer Kühlung (im Labor z.B. mit Eis) durch. Es ist aber prinzipiell möglich, auch Lösungsmittel-frei zu arbeiten. Der Grad der Verdünnung durch Lösungsmittel wird in erster Linie von der Auslegung und Kapazität des Kühlsystems bestimmt und liegt im Labormaßstab typischerweise im Bereich von 250-500 ml/Mol Oligosulfan, doch können für den Technikums- und Betriebsmaßstab auch andere Lösungsmittelmengen zur Anwendung kommen.

...

Die Aufarbeitung des bei der Chlorierungsreaktion erhaltenen Gemisches besteht in einer destillativen Abtrennung des Lösungsmittels und evtl. gebildeter Nebenprodukte wie z.B. $SCl_2$ oder $S_2Cl_2$, welche mit Vorteil bei einem Unterdruck von 20 - 150 mbar und bei Raumtemperatur erfolgt. Das dabei als Destillationssumpf erhaltene, orange bis tiefrot gefärbte Rohprodukt kann bis zu zwei Einzelbestandteilen der in Formel (II) wiedergegebenen Zusammensetzungen, die sich voneinander durch einen unterschiedlichen Chlorierungsgrad am Si-Atom unterscheiden (d.h. a = 1 oder 2), enthalten, neben geringen Mengen der Ausgangssilane der Formel (I). Vor allem zur Abtrennung dieser Oligosulfane ist eine fraktionierte Vakuumdestillation des Rohproduktes von Vorteil, die z.B. bei Unterdrücken von 0.01 - 10 mbar durchgeführt wird. Als Hauptlauf erhält man dabei eines (a = 1 oder a = 2) oder auch ein Gemisch der beiden Sulfenylchloride der durch Formel (II) repräsentierten Zusammensetzung, die sich in ihren Siedepunkten nur sehr geringfügig voneinander unterscheiden. Liegt ein Gemisch vor, muß vor der Rückveresterung der Si-Cl-Gruppen mit einem Alkohol der Formel (III) die Größe des stöchiometrischen Faktors a durch analytische Gesamtchlorbestimmung nach bewährten Verfahren (z.B. Aufschluß nach Schöninger, Bestimmung argentometrisch, Endpunktsanzeige potentiometrisch) ermittelt werden.

Im zweiten Schritt der erfindungsgemäßen Reaktionsfolge wird das Silan(gemisch) der Formel (II) mit einer hinsichtlich a genau stöchiometrischen Menge des Alkohols der Formel (III) umgesetzt, dessen Alkylrest genau dem der Alkoxysilylgruppe(n) in dem(n) Silan(en) der Formel (II) entspricht(sprechen).

...

Diese als Veresterungsreaktion an sich bekannte Reaktion kann nach verschiedenen Verfahren, wie sie z.B. in der DE-PS 20 61 189 unter kontinuierlicher Prozeßführung oder z.B. in der DE-PS 28 00 017 bei diskontinuierlicher Reaktionsführung dokumentiert sind, betrieben werden. Wichtig ist dabei lediglich, daß solche Stöchiometrien und Reaktionsbedingungen vermieden werden, die auch zur Veresterung der S-Cl-Funktion führen können.

Beispielhaft für solche Bedingungen ist das Lösen der Sulfensäurechloride der Formel (II) in einem aprotischen, organischen Lösungsmittel (aromatische/aliphatische Kohlenwasserstoffe , aromatische/aliphatische Chlorkohlenwasserstoffe, offenkettige/cyclische Ether und Ketone, DMF, DMSO) in Verhältnissen von 250 - 500 ml pro Mol Silan und die tropfenweise Zugabe des Alkohols der Formel (III), bei Temperaturen von 0 bis 60°C, wobei man in einer bevorzugten Ausführungsform das Reaktionsgemisch zur schnellen Entfernung des als Nebenprodukt gebildeten HCl-Gases von einem Inertgas (z.B. Stickstoff) durchströmen läßt.

Falls die isolierte Darstellung der Sulfenylchloride der Formel (IV) angestrebt wird, so ist dazu die Aufarbeitung des nach der Veresterungsreaktion erhaltenen Reaktionsgemisches in an sich bekannter Weise durch Abdestillation des Lösungsmittels und anderer evtl. noch anwesender Leichtsieder im Vakuum geeignet. Das so erhaltene Rohprodukt weist schon eine hohe Reinheit auf (typischerweise 92 - 97 %), wie sich dies z.B. durch Elementaranalyse, Massenspektrometrie oder $^{1}$H-NMR-Spektroskopie nachweisen läßt. Sulfenylchloride noch höherer Reinheit lassen sich durch anschließende Vakuumdestillation erhalten, wobei während der Destillation ein möglichst gutes Vakuum (unter 1 mbar) einzuhalten ist.

...

Zur Veresterung der S-Cl-Funktion in den Silanen der Formel (IV) werden diese in einem aprotischen, organischen Lösungsmittel gelöst bzw. wird die bei der Veresterung der Si-Cl-Bindungen erhaltene Reaktionslösung ohne Aufarbeitung und Isolierung der Sulfenylchloride der Formel (IV) gleich weiterverwendet.
Als solche Lösungsmittel kommen alle bereits oben auf der Seite 6, Zeilen 23ff aufgezählten in Frage, bevorzugt sind aus ökonomischen Gründen Petrolether oder Toluol.
Die eingesetzte Lösungsmittelmindestmenge richtet sich nach dessen Tendenz zur Ausfällung des bei der Reaktion als Nebenprodukt gebildeten Alkalichlorids und beläuft sich für aromatische oder aliphatische Kohlenwasserstoffe z.B. auf 150 ml pro Mol Silan. Beliebig größere Lösungsmittelmengen sind möglich. Die erfindungsgemäße Verfahrensweise der Veresterung dieser Sulfenylchloride der Formel (IV) besteht nun darin, daß deren Lösung mit der genau äquimolaren Menge des Alkalialkoholats der Formel (V) gelöst in Alkohol der Formel (III) versetzt wird, dessen Alkylrest denen der Alkoxysilylgruppen in den Silanen der Formel (IV) entspricht.
Die Konzentration der eingesetzten alkoholischen Alkoholatlösungen sollte möglichst hoch sein, um eine möglichst quantitative Ausfällung der als Nebenprodukte gebildeten Alkalichloride nicht zu beeinträchtigen (Lithiumchlorid z.B. ist in Alkoholen löslich, weshalb Lithiumalkoholate als Veresterungsagentien weniger geeignet sind und hierfür Natriumalkoholate bevorzugt sind).
Die obere Konzentrationsgrenze für diese Alkoholatlösungen wird bestimmt von ihrer Viskosität bei der Zugabetemperatur und beträgt z.B. bei Raumtemperatur ca. 30 Gew.-% für Methylat und ca. 20 Gew.-% für Ethylat. Besonders einfach lassen sich diese Lösungen durch Zugabe der entsprechenden Menge an Alkalimetall zum Alkohol herstellen, da hierbei bekanntlich unter

...

Wasserstoffentwicklung Alkalialkoholat gebildet wird, das gelöst im überschüssigen Alkohol anfällt. Doch können auch als pulverförmige Feststoffe käuflich zu erwerbende Alkalialkoholate wie z.B. Natriummethylat einfach in den entsprechenden Alkohol eingerührt werden. Die Veresterung der Sulfenylchloridfunktion in Silanen der Formel (IV) mit Hilfe von Alkalialkoholaten verläuft bei Raumtemperatur (20 - 25°C) spontan ohne übermäßig hohe Wärmetönung ab.
Man arbeitet daher bevorzugt bei dieser Temperatur, doch wird bei anderen Temperaturen qualitativ das gleiche Reaktionsgeschehen beobachtet.
Die untere Temperaturgrenze hängt von den Erstarrungspunkten der jeweils eingesetzten Lösungsmittel und obere Grenzen von deren Siedepunkten.ab. Der mit gängigen Lösungsmitteln unter vertretbarem Aufwand einstellbare Temperaturbereich liegt zwischen0°C und 60°C.

Die Isolierung der Sulfensäureester der Formel (VI) erfolgt am einfachsten durch Abfiltrieren des gebildeten Alkalichloridniederschlags nach an sich bekannten Methoden und durch destillatives Entfernen des Lösungsmittels und des Alkohols der Formel (III) bei Normaldruck oder im Vakuum. Die als gelbe Flüssigkeiten anfallenden Rohprodukte sind schon sehr rein (94 - 97 % laut Schwefelanalyse), so daß eine Vakuumdestillation nicht erforderlich ist.

Das erfindungsgemäße 3-Stufenverfahren zur Herstellung der Sulfensäureester der Formel (VI) weist gegenüber dem in der US-PS 42 78 585 beschriebenen die folgenden Vorteile auf:

1. Die oligosulfidischen Ausgangssilane der Formel (I) sind aus 3-Chlorpropylsilanen leicht in einer Stufe

...

in hohen Ausbeuten zugänglich (z.B. die DE-OS 33 11 340: 96 % Ausbeute für das Disulfid), während die in der US-PS 4 278 585 als Silaneinsatzstoffe verwendeten 3-Mercaptopropylsilane nur in vergleichsweise niedriger Ausbeute aus einem Einstufenverfahren ausgehend von 3-Chlorpropylsilanen erhalten werden können (vgl. z.B. die GB-PS 1 102 251: Ausbeute 43 %) oder aber ein aufwendigeres Zweistufenverfahren erforderlich machen (vgl. z.B. die DE-PS 11 63 818: Ausbeute 67 %).

2. Der erfindungsgemäße Einsatz der Oligosulfane der Formel (I) erlaubt bei evtl. unvollständigem Umsatz bei der Chlorierung eine leichte destillative Abtrennung der Produkte der Formel (II), da sich die jeweiligen Molekulargewichte wie etwa 2:1 verhalten und damit große Siedepunktsdifferenzen bestehen. Demgegenüber besteht ein nur geringer Molekulargewichts- und damit Siedepunktsunterschied zwischen den in der US-PS 42 78 585 eingesetzten 3-Mercaptopropylsilanen und den daraus erhaltenen 3-Trialkoxysilylpropylsulfenylchloriden, so daß eine destillative Produktabtrennung und -reinigung nicht möglich ist.

3. Die erfindungsgemäße Veresterung der Sulfensäurechloridfunktion in Silanen der Formel (IV) mit Hilfe von Alkalialkoholaten hat gegenüber der in der US-PS 4 278 585 beschriebenen Variante unter kombiniertem Einsatz von Alkoholen und tertiären Aminen (als HCl-Akzeptoren) vor allem den Vorteil, daß hier lediglich ein leicht abfiltrierbarer Alkalichloridniederschlag gebildet wird, während dort Aminhydrochloride als voluminöse und schwer filtrierbare Niederschläge entstehen.

...

Die erfindungsgemäß hergestellten Sulfensäurechloride werden mit solchen Präpolymeren umgesetzt, die noch über Doppelbindungsanteile verfügen. Man erhält dann Produkte, die unter Einwirkung von Feuchtigkeit vulkanisieren bzw. polymerisieren.

Die Sulfensäurechloride finden aber ebenso wie die Sulfensäureester auch Verwendung als Verstärkungsadditiv in Kieselsäure-haltigen, mit Schwefel vernetzbaren Kautschuken.

...

**Beispiel 1**

Herstellung von $Cl_2(OCH_3)Si-C_3H_6-S-Cl$: Die Schreibweise - $C_3H_6$ - steht hier wie in allen folgenden Beispielen für die Trimethylengruppe $-CH_2-CH_2-CH_2-$

162 g $(CH_3O)_3Si-C_3H_6-S_2-C_3H_6-Si(OCH_3)_3$ werden in 200 ml $CCl_4$ gelöst. Zu dieser Lösung wird bei 0°C innerhalb von 3 h 75,2 ml flüssiges Chlor zugetropft. Im Anschluß daran wird das Reaktionsgemisch für 1 h bei Raumtemperatur gerührt, anschließend das Lösungsmittel im Vakuum abgezogen. Das erhaltene, orangefarbene Rohprodukt (178 g) wird über eine Vigreux-Kolonne im Vakuum fraktioniert. Der Hauptlauf (Kp. (2 mm) = 105-112°C, 139 g $\hat{=}$ einer Ausbeute von 69,9%) ist eine gelbgefärbte Flüssigkeit mit einem $Cl_2$-Gehalt von 44,1 % (Theorie: 44,4 %).

**Beispiel 2**

Herstellung von $Cl_2(C_2H_5O)Si-C_3H_6-S-Cl$ aus dem Disulfid:

475 g $(C_2H_5O)_3Si-C_3H_6-S_2-C_3H_6-Si(OC_2H_5)_3$ werden in 300 ml $CCl_4$ gelöst. In diese Lösung wird bei 0°C innerhalb von 10 h über ein Tauchrohr solange gasförmiges Chlor eingeleitet, bis die Lösung kein Chlor mehr aufnimmt und dies erstmals über das Überdruckventil entweicht (ca. 320 g Chlor). Nach Auftauen auf Raumtemperatur und Abziehen des Lösungsmittels erhält man 477 g einer rotbraunen Flüssigkeit, die laut G-C-Analyse zu 85,4 Fl-% aus $Cl_2(C_2H_5O)Si-C_3H_5-S-Cl$ und zu 11,9 Fl-% aus $Cl(C_2H_5O)_2Si-C_3H_6-S-Cl$ neben anderen Leichtsiedern besteht (Cl-Wert: 38%). Durch Fraktionierung im Vakuum lassen sich daraus 377 g einer gelben Flüssigkeit ($\hat{=}$ einer Ausbeute von 74,2%) als Hauptfraktion erhalten (Kp. (0,05 mm) = 100-106°C), deren Cl-Gehalt zu 41,4 % ermittelt wurde (Theorie: 41,9 % Cl).

...

0226001

Beispiel 3

Herstellung von $Cl_2(C_2H_5O)Si-C_3H_6-S-Cl$ aus dem Tetrasulfid:

269,5 g $(C_2H_5O)_3Si-C_3H_6-S_4-C_3H_6-Si(OC_2H_5)_3$ (Verstärkungsadditiv Si 69®, Degussa) werden in 150 ml $CCl_4$ gelöst. In diese Lösung werden bei 0°C innerhalb von 11 h bis zur Sättigung 252 g Chlor eingeleitet und nach dem Auftauen des Reaktionsgemisches auf Raumtemperatur das Lösungsmittel und die als Nebenprodukte gebildeten Schwefelchloride im Vakuum abgezogen. Man erhält 231 g einer tiefroten Flüssigkeit, die einer fraktionierten Vakuumdestillation unterworfen wird. Die Hauptfraktion (Kp. (0,2 mm)= 103 - 109°C, 215 g ≙ einer Ausbeute von 84,7 %) ist eine hellgelbe Flüssigkeit mit einem S-Gehalt von 12,1 % (Theorie: 12,6 %) und einem Cl-Gehalt von 41,9 % (entsprechend der Theorie), deren $^1H$-NMR-Spektrum in Abbildung 1 wiedergegeben wird (60 MHz).

Beipeil 4

Herstellung von $(CH_3O)_3Si-C_3H_6-S-Cl$ aus dem unter Beispiel 1 hergestellten Silan:

139 g $Cl_2(OCH_3)Si-C_3H_6-S-Cl$ werden in 150 ml Petrolether gelöst und bei Raumtemperatur innerhalb von 2 h bei 5-10°C unter kräftigem Rühren und unter Einleiten gasförmigen Stickstoffs unterhalb der Flüssigkeitsoberfläche tropfenweise mit 37,2 g Methanol versetzt. Nach dem Abziehen des Lösungsmittels erhält man durch Vakuumdestillation einen Hauptlauf (Kp (0,15 mm)= 102-105°C, 116,5 g ≙ einer Ausbeute von 87,1 %), dessen S-Gehalt 13,2 % (Theorie: 13,9 %) und dessen Cl-Gehalt 15,2 % (Theorie: 15,4 %) betragen. Das $^1H$-NMR-Spektrum der gelben Flüssigkeit ist als Abbildung 2 wiedergegeben (250 MHz).

...

Beipsiel 5

Herstellung von $(C_2H_5O)_3Si-C_3H_6-S-Cl$ aus dem unter Beispiel 3 hergestellten Silan:

215 g $Cl_2(OC_2H_5)Si-C_3H_6-S-Cl$ werden in 200 ml Petrolether gelöst und wie unter Beispiel 4 beschrieben mit 78,3 g Ethanol versetzt. Der Hauptlauf der nach Abziehen des Lösungsmittels durchgeführten Vakuumfraktionierung (Kp (0,5 mm) = 112 - 115°C, 209,5 g ≙ einer Ausbeute von 90,7 %) weist einen Cl-Wert von 13,5 % (Theorie: 13,0 %) und einen S-Gehalt von 11,4 % (Theorie: 11,8 %) auf. Das $^1$H-NMR-Spektrum der gelben Flüssigkeit ist als Abbildung 3 wiedergegeben (250 MHz).

Beispiel 6

Herstellung von $(CH_3O)_3Si-C_3H_6-S-OCH_3$ aus dem unter Beispiel 4 hergestellten Silan:

116,5 g $(CH_3O)_3Si-C_3H_6-S-Cl$ werden in 150 ml Petrolether versetzt und bei Raumtemperatur innerhalb von 30 min mit 90 g einer 30%igen Lösung von Natriummethylat in Methanol versetzt. Vom ausgefallenen Natriumchlorid wird abfiltriert und das Filtrat im Vakuum vom Lösungsmittel befreit. Es werden 103 g (≙ einer Ausbeute von 90,2 %) einer gelbbraunen Flüssigkeit erhalten, die sich beim Versuch einer Vakuumdestillation zersetzt. Das Rohprodukt hat einen S-Gehalt von 13,6 % (Theorie: 14,2 %) und ergibt das in Abbildung 4 wiedergegebene $^1$H-NMR-Spektrum (250 MHz).

Beispiel 7

Herstellung von $(C_2H_5O)_3Si-C_3H_6-S-O-C_2H_5$ aus dem unter Beispiel 5 hergestellten Silan:

In Analogie zu dem unter Beispiel 6 beschriebenen Verfahren werden aus 209,5 g $(C_2H_5O)_3Si-C_3H_6-S-Cl$

...

und 308 g einer 17%igen Natriumethylatlösung in Ethanol in 250 ml Petrolether als Lösungsmittel nach dem Aufarbeiten 189,2 g (≙ einer Ausbeute von 87,3 %) einer orangebraungefärbten Flüssigkeit mit einem S-Gehalt von 10,7 % (Theorie: 11,4 %) erhalten, dessen $^1H$-NMR-Spektrum in Abbildung 5 wiedergegeben wird (60 MHz).

Beispiel 8

Vergleichsbeispiel aus US-PS 4 278 585:

In Anlehnung an das Beispiel III der genannten Patentschrift wurden 196 g Mercaptopropyltrimethoxysilan in 2 l n-Pentan gelöst und zu dieser Lösung bei Raumtemperatur 135 g Sulfurylchlorid tropfenweise innerhalb von 2h zugegeben. Es wurde noch für 20 min gerührt und vom erhaltenen, klaren Reaktionsgemisch das Lösungsmittel abgezogen. Das $^1H$-NMR-Spektrum des orangefarbenen Reaktionsprodukts (219 g) beweist das Vorliegen des Ausgangssilans in einer Konzentration von ca. 65 %. Daneben wurden vor allem Produkte erhalten, deren Methoxygruppen am Silicium teilweise durch Chlor ausgetauscht waren. Die weitere Umsetzung dieses Reaktionsgemisches mit Methanol/Triethylamin, wie in Beispiel III von US-PS 4 278 585 beschrieben, führt nicht zur Bildung eines einheitlichen Sulfensäureesters.

0226001

Degussa Aktiengesellschaft, Weißfrauenstraße 9, 6000 Frankfurt am Main

Verfahren zur Herstellung von Sulfensäurechloriden und Sulfensäureestern

Patentanspruch

Verfahren zur Herstellung von Sulfensäurechloriden und Sulfensäureestern mit hydrolisierbaren Silylgruppen,
dadurch gekennzeichnet, daß man ein Silylgruppen-haltiges Oligosulfan der Formel (I)

$$\left[(R)_b(R'O)_cSi-(CH_2)_n\right]_2-S_x,$$ in der

bedeuten:

R: $C_1$-$C_2$-Alkyl, insbesondere Methyl
R': $C_1$-$C_5$-Alkyl insbesondere Methyl, Ethyl, $C_5$-$C_6$-Cycloalkyl, Aralkyl, insbesondere Benzyl,
x: 2 oder 3 oder 4
n: 1 oder 3
b: 0 oder 1
c: 2 oder 3, mit b+c=3

in einem gegenüber Chlor inerten organischen Lösungsmittel löst und diese Lösung langsam und unter starker Kühlung mit der 2- bis 6-fachen molaren Menge an Chlor, bezogen auf das Oligosulfan, versetzt, bis zum Ende der Umsetzung zu Sulfensäurechlorid mit der in Formel (II) wiedergegebenen Zusammensetzung

$$Cl_a(R)_b(R'O)_dSi-(CH_2)_n-SCl$$

...

0226001

in der a: 1 oder 2 und d: 1 oder 2 ist mit a+b+d=3 und die anderen Symbole die oben angegebene Bedeutung haben, rührt,

das Lösungsmittel im Vakuum abzieht

das anfallende Rohprodukt im Vakuum fraktioniert,

das so erhaltene gereinigte Sulfensäurechlorid (-gemisch) gemäß Formel (II) in einem inerten organischen Lösungsmittel löst,

unter kräftigem Rühren diese Lösung tropfenweise mit der zu a stöchiometrischen Menge eines Alkohols der Formel (III)

R'OH

bei einer Temperatur von 0 bis 60 °C versetzt,

nach der Veresterung das Lösungsmittel abzieht, durch fraktionierte Destillation das Sulfensäurechlorid der Formel (IV)

$$(R)_b(R'O)_cSi-(CH_2)_n-S\ Cl$$

erhält, in der die Symbole die oben angegebene Bedeutung haben,

diese Verbindung in einem inerten aprotischen organischen Lösungsmittel löst,

die Lösung mit der äquimolaren Menge eines Alkalialkoholats der Formel (V)

R'OY versetzt, in

der Y Na, K oder Li bedeutet,

und den Sulfensäureester der Formel (VI)

$$(R)_b(R'O)_cSi-(CH_2)_n-SOR'$$

nach Abfiltrieren des Alkalichloridniederschlages und Entfernen des Lösungsmittels im Vakuum isoliert.

...

1/5

0226001

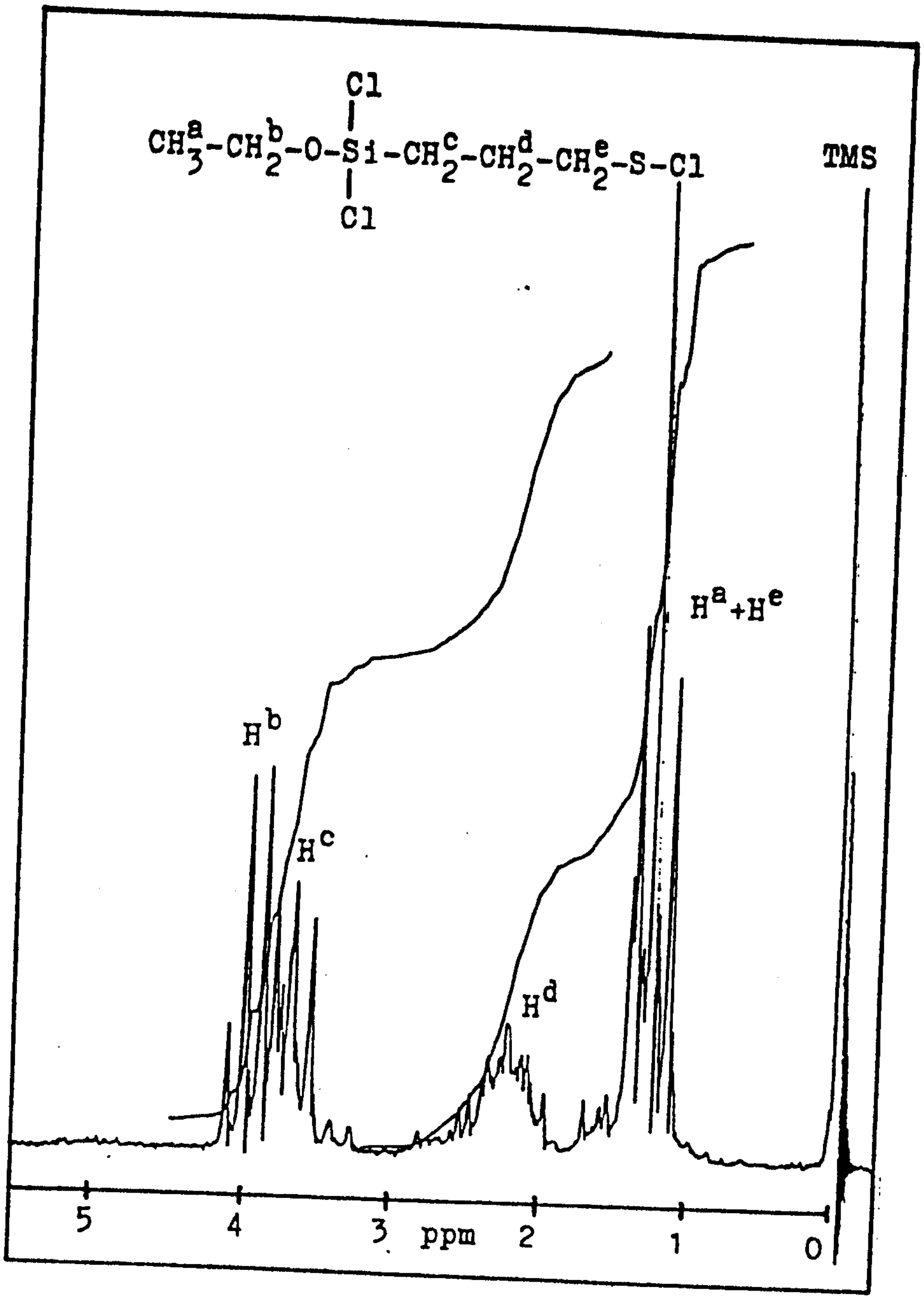


Abb. 1

2/5

0226001

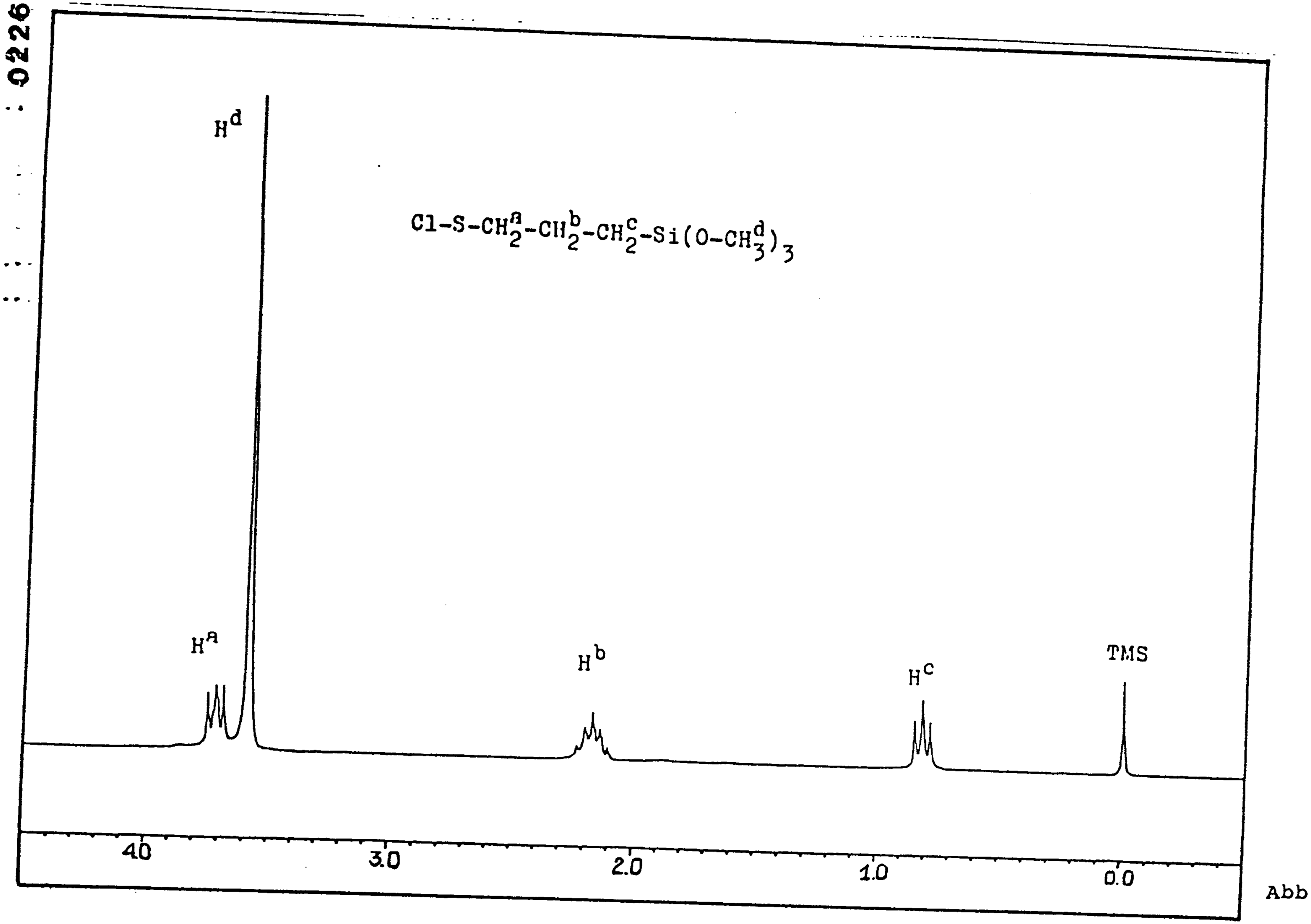


Abb. 2

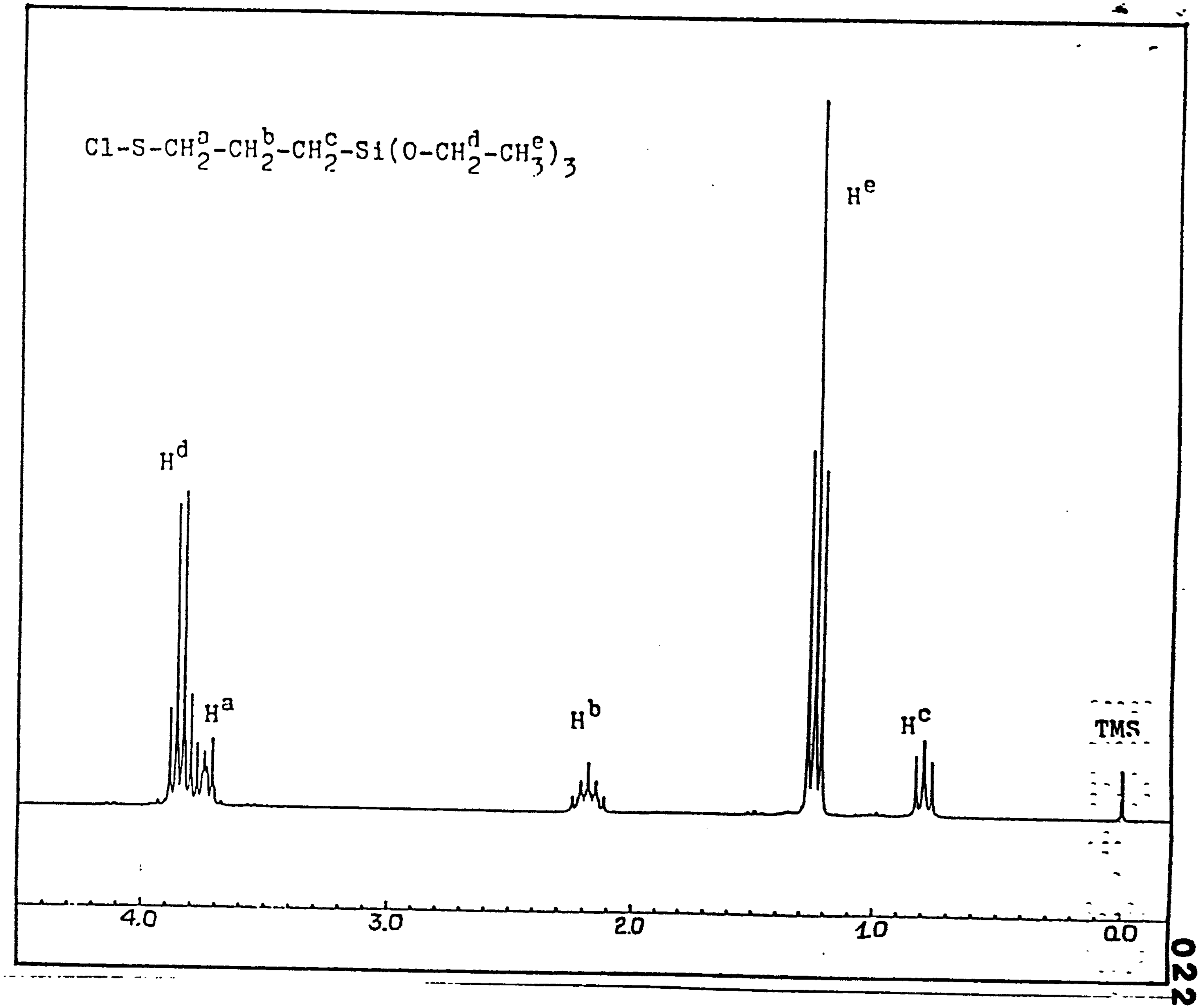
Cl-S-CH2a-CH2b-CH2c-Si(O-CH2d-CH3e)3
He
Hd
Ha
Hb
Hc
TMS
4.0
3.0
2.0
1.0
0.0

Abb. 3

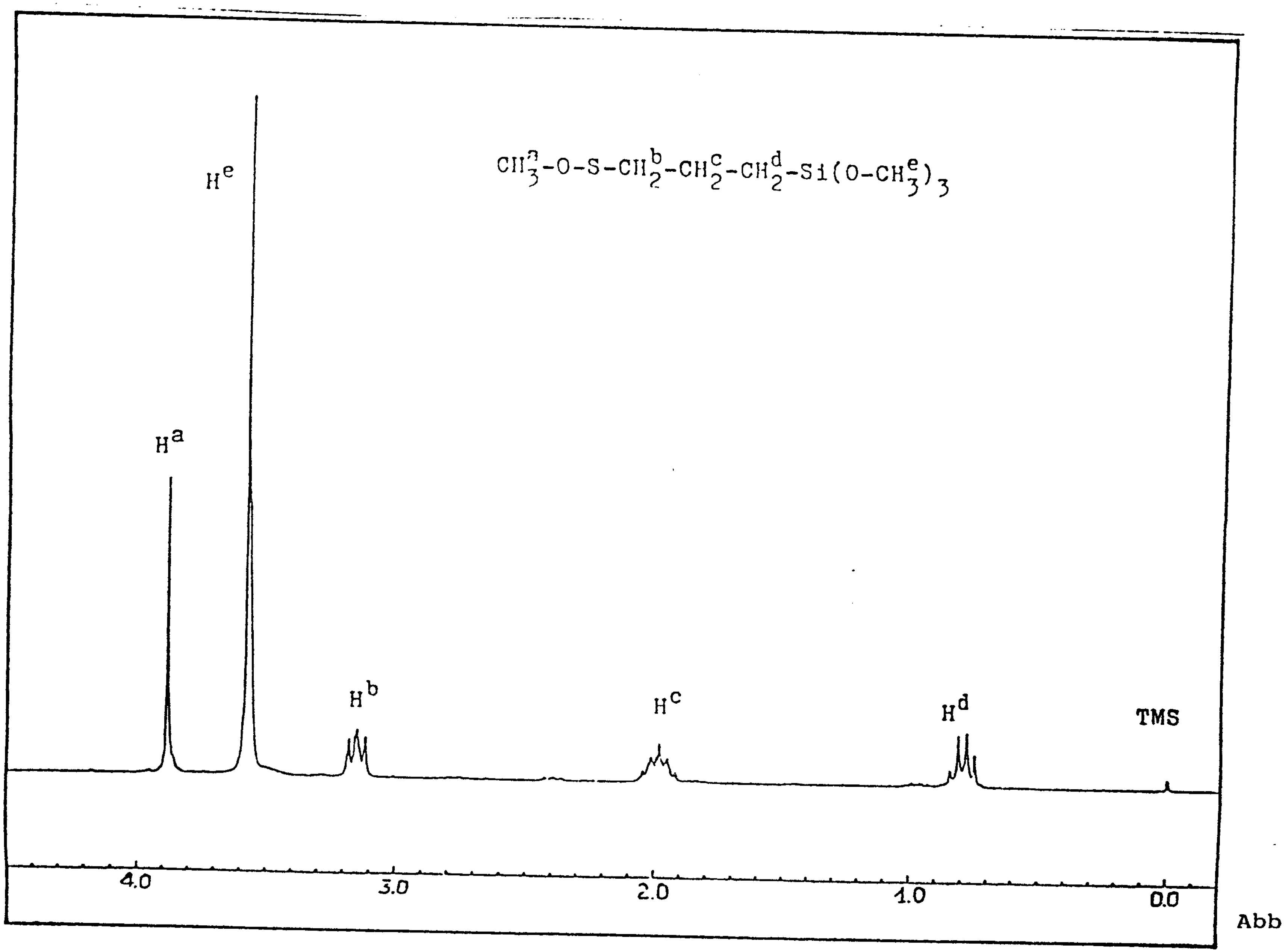


Abb. 4

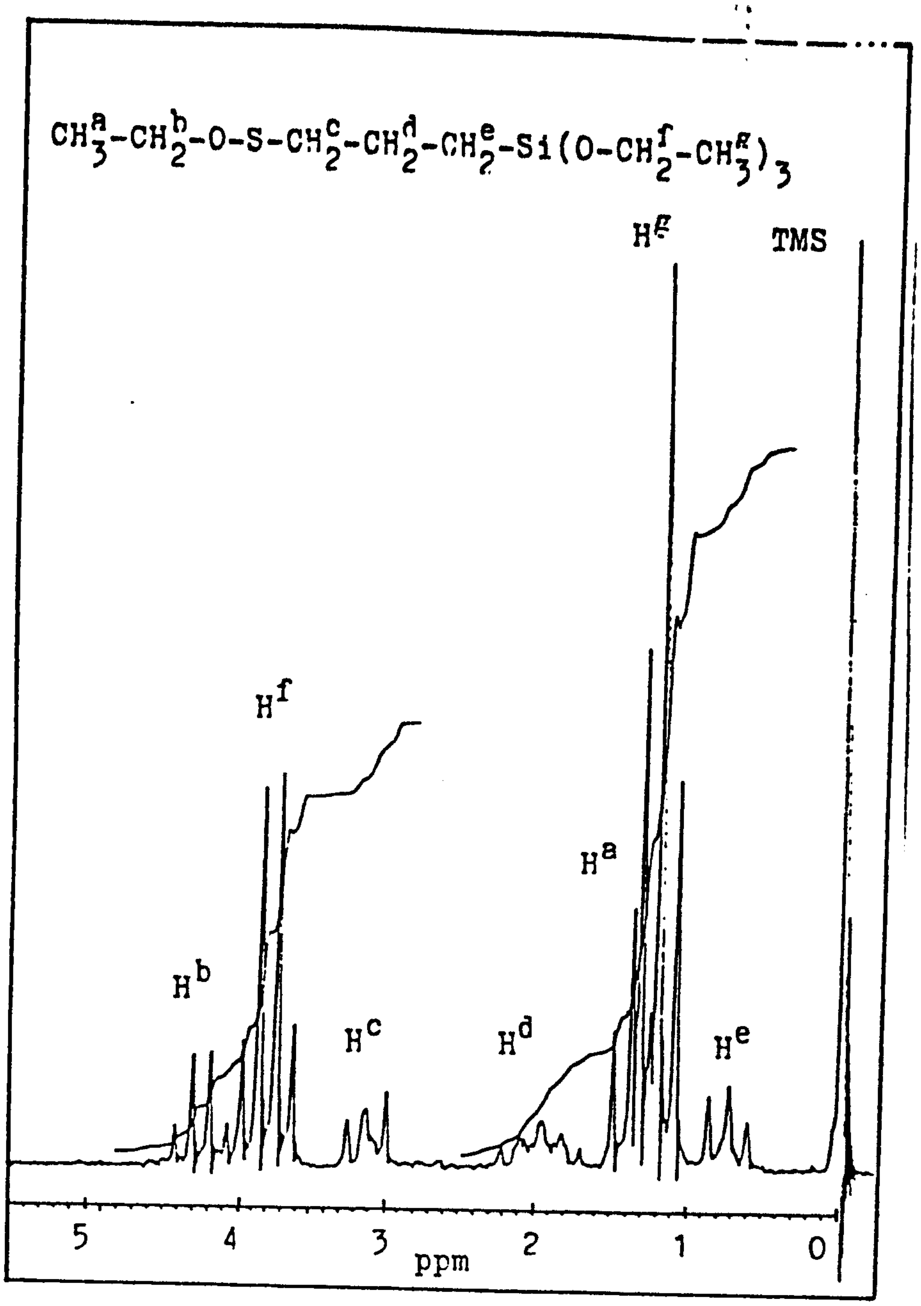

$CH_3^a-CH_2^b-O-S-CH_2^c-CH_2^d-CH_2^e-Si(O-CH_2^f-CH_3^g)_3$
$H^g$
TMS
$H^f$
$H^a$
$H^b$
$H^c$
$H^d$
$H^e$
5
4
3
ppm
2
1
0


Abb. 5